# FASCICULE DE BREVET EUROPEEN

(11) **EP 2 342 855 B1**
(45) Date de publication et mention de la délivrance du brevet: **20.07.2016**
(21) Numéro de dépôt: 09751883.1
(22) Date de dépôt: 04.11.2009
(51) Int. Cl.: H04L 1/08, H04L 1/00

(54) **PROCÉDÉ D'AMÉLIORATION D'ACQUISITION D'UN ENSEMBLE DE DONNÉES ÉMISES DE FAÇON RÉPÉTITIVE EN ENVIRONNEMENT DIFFICILE**
VERFAHREN ZUM VERBESSERN DER AKQUISITION EINES WIEDERHOLT IN EINER HARSCHEN UMGEBUNG GESENDETEN DATENSATZES
METHOD FOR IMPROVING THE ACQUISITION OF A DATA SET REPEATEDLY TRANSMITTED IN A HARSH ENVIRONMENT

(30) Priorité: 04.11.2008 FR 0806136
(43) Date de publication de la demande: 13.07.2011
(73) Titulaire: THALES, 92400 Courbevoie (FR)
(72) Inventeur: DAMIDAUX, Jean-Louis, F-31650 Auzielle (FR); LEVY, Jean-Christophe, F-31130 Balma (FR)
(74) Mandataire: Esselin, Sophie
(86) Numéro de dépôt international: PCT/EP2009/064645
(87) Numéro de publication internationale: WO 2010/052252

(56) Documents cités:
- WO-A-01/78295
- WO-A-99/67897
- DECKER P: "An adaptive type-II hybrid ARQ/FEC protocol suitable for GSM" VEHICULAR TECHNOLOGY CONFERENCE, 1994 IEEE 44TH STOCKHOLM, SWEDEN 8-10 JUNE 1994, NEW YORK, NY, USA,IEEE, 8 juin 1994 (1994-06-08), pages 330-333, XP010123101 ISBN: 978-0-7803-1927-1

## Description

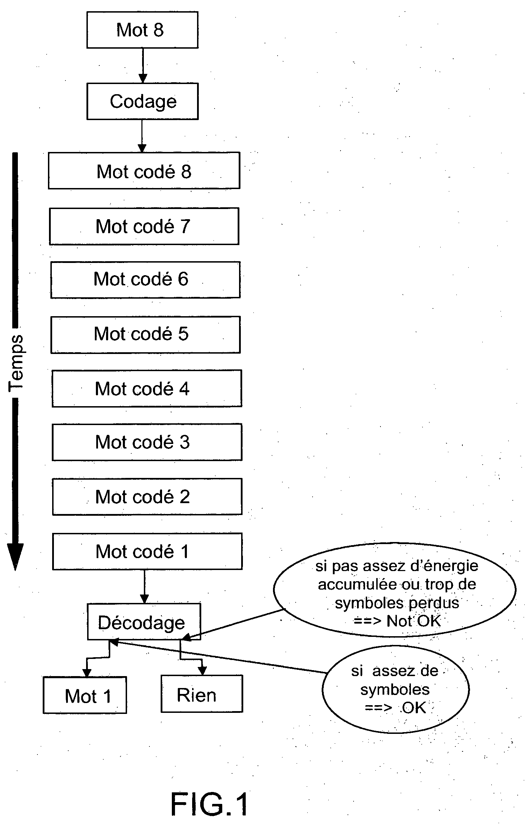

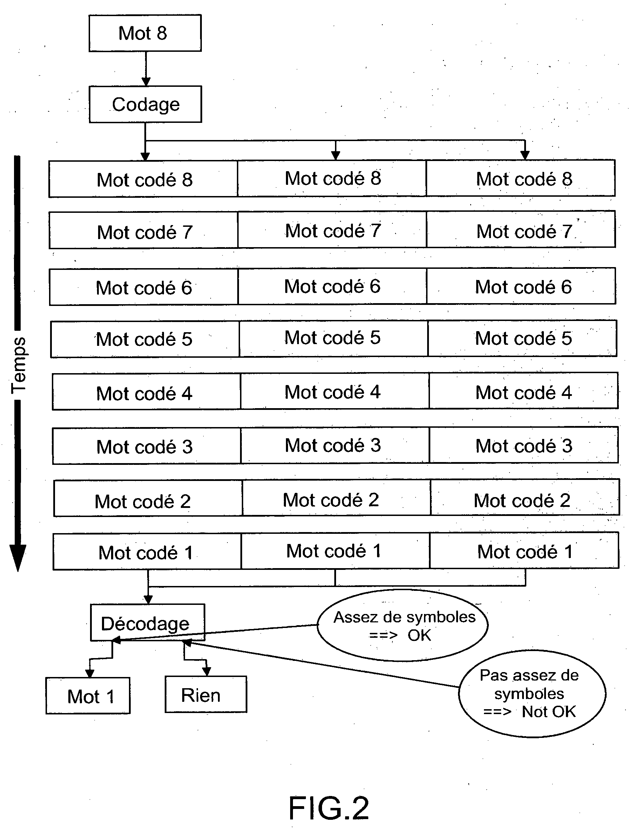

La présente invention se rapporte à un procédé d'amélioration d'acquisition d'un ensemble de données émises de façon répétitive en environnement difficile. Le document WO 99/67897 divulgue un procédé de transmission des données de façon répétitive dans un system GSM par satellite. Dans le domaine de l'acquisition des données transmises par les systèmes de navigation par satellites, le problème technique posé est que :
∘ Les données de navigation sont transmises à l'aide de signaux de navigation dont la puissance est extrêmement faible,
∘ Les utilisateurs doivent recevoir ces données dans des environnements qui atténuent énormément ces signaux,
∘ La réception peut être interrompue par des masquages de la ligne de vue.
   Afin d'améliorer le taux d'erreur sur les mots reçus (WER pour « Word Error Rate » en anglais), les données peuvent être encodées en symboles à l'aide de différents codages (Viterbi, Turbo Code, BCH, Low Density Parity Code [LDPC],...). La réception correcte des symboles; puis des données est directement liée à l'énergie associée à chaque symbole. Les solutions connues pour améliorer la réception sont les suivantes :
∘ Transmettre à un instant et à un emplacement prédictibles les symboles afin de pouvoir accumuler l'énergie correspondant à chaque symbole. C'est la solution adoptée pour les sous-trames 1 et 2 du GPS L1C. Elle n'est pas adaptée à la transmission de données où le cadencement des données émises est réalisé dynamiquement, du fait que les données des sous-trames 1 et 2 sont émises à des temps connus dans le déroulement de la trame, ce qui fait que ces données sont émises implicitement de façon synchrone, parce que les trames doivent être synchrones. Ceci est illustré par la figure 1, d'après laquelle, par exemple huit données («Mot 1 ...... « Mot 8 », comme dans les exemples des figures suivantes) sont codées, puis émises les unes à la suite des autres («Mot codé 1 »..... «Mot codé 8 »). A la réception, après décodage des mots codés successifs (dans le cas de la figure 1, le décodage de « Mot codé 1 » doit produire « Mot 1 »), si le récepteur a pu recevoir suffisamment de symboles (de « Mot 1 » dans le cas présent), la donnée correspondante est disponible (rectangle « Mot 1 »), sinon, si le récepteur n'a pas accumulé assez d'énergie pour cette donnée ou si trop de symboles ont été perdus pendant la transmission, le décodage produit une information « Rien ».
∘ Augmenter l'énergie transmise par symbole, ce qui n'est pas autorisé par la réglementation et ne résout pas le problème des masquages.
∘ Augmenter la durée d'un symbole, mais cela réduit la quantité de symboles que le système peut transmettre. De plus, les performances sont toujours limitées par l'énergie associée à chaque symbole.
∘ Augmenter la robustesse du codage en augmentant la taille de ce codage. L'inconvénient est la réduction de la bande passante qui est déjà très limitée. De plus, les performances de réception sont toujours limitées par l'énergie associée à chaque message. Ceci est illustré par la figure 2 d'après laquelle les données successives (« Mot 1 ».... «Mot 8 ») sont codées, puis émises par exemple trois fois chacune (« Mot codé 1 », (« Mot codé 1 », « Mot codé 1 », ..... « Mot codé 8 », « Mot codé 8 », « Mot codé 8 »). De façon analogue au cas de la figure 1, à la réception, le décodage produit en sortie soit les mots émis si le récepteur reçoit suffisamment de symboles, soit une information « Rien » dans le cas contraire.

La présente invention a pour objet un procédé d'amélioration d'acquisition de données ou d'ensembles de données émises de façon répétitive en environnement difficile, procédé qui permette, dans la majorité des cas, même lorsque lors de la transmission de données est réalisée dynamiquement, tout en respectant la réglementation s'il s'agit de données de radionavigation par satellites, sans réduire les performances de réception ni la bande passante.

Le procédé conforme à l'invention est caractérisé en ce qu'à l'émission, on ajoute en préambule à chaque donnée ou ensemble de données une information d'identification de ces données plus courte que l'ensemble de ces données et mieux codée qu'elles en vue d'une acquisition plus robuste de cet ensemble de données, qu'à la réception, on identifie chaque donnée ou ensemble de données incident à l'aide de l'information d'identification, on accumule l'énergie des données ou ensembles de données ayant la même information d'identification, et que lorsqu'une quantité d'énergie suffisante a été accumulée, l'ensemble de données ou la donnée correspondant (e) est reconnu (e) valide.

Par la suite, on utilisera le terme de donnée pour désigner indifféremment une donnée ou un ensemble de données.

La caractéristique principale de l'invention est de fournir une aide « contextuelle » relative aux données transmises en indiquant la nature et la mise à jour éventuelle de ces données afin que le récepteur puisse accumuler l'énergie quand les données sont répétées de façon identique. Ces données d'aide étant courtes, on peut obtenir une bonne qualité de réception et de protection de cette aide grâce à son codage plus long que celui des données.

Dans un système de radionavigation, de nombreuses informations (Ephémerides, almanachs, ...) sont répétées au cours du temps soit sur plusieurs fréquences, soit par plusieurs satellites, afin de fournir les services à chaque instant en chaque point du globe, ce qui permet d'avoir de nombreuses opportunités pour accumuler l'énergie reçue pour chaque donnée.

La présente invention sera mieux comprise à la lecture de la description détaillée d'un mode de réalisation, pris à titre d'exemple non limitatif et illustré par le dessin annexé, sur lequel :
- les figures 1 et 2, déjà décrites ci-dessus, sont des chronogrammes simplifiés des étapes principales des procédés de l'art antérieur, et
- la figure 3 est un chronogramme simplifié des étapes principales du procédé conforme à la présente invention.

Le procédé de l'invention est décrit ci-dessous en référence à l'acquisition de données de navigation provenant de satellites de radionavigation, en particulier en environnement difficile (environnement perturbé, masquage de la ligne de vue,... ) mais il est bien entendu que l'invention n'est pas limitée à cette seule application, et qu'elle peut être mise en oeuvre lorsque l'on désire améliorer la réception de données en environnement difficile, quelles qu'elles soient, à condition qu'elles soient émises de façon répétitive et identique.

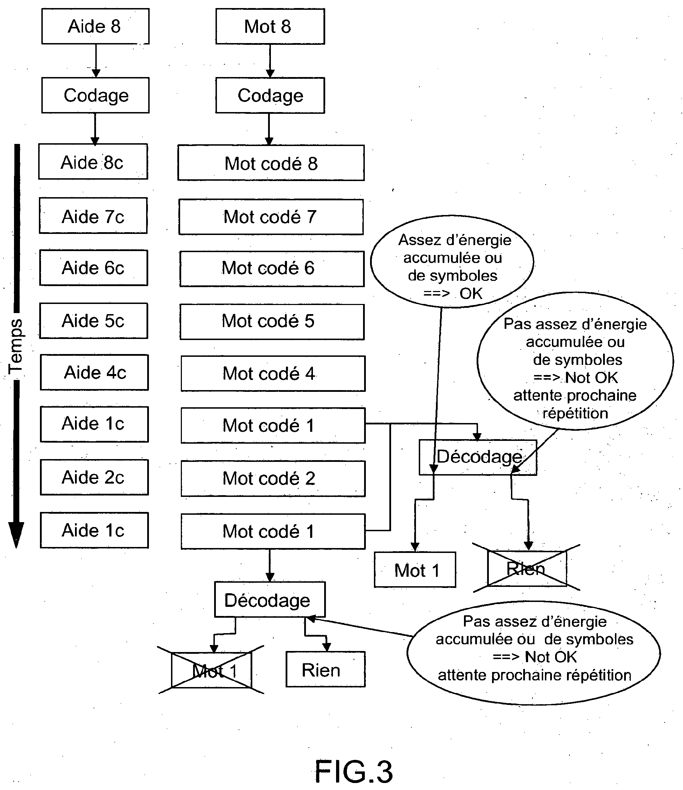

On a illustré en figure 3 la mise en oeuvre du procédé de l'invention. Ainsi, l'émetteur traite, en même temps que chaque donnée ou ensemble de données (« Mot 1 »..... «Mot 8 ») une information d'identification correspondante (« Aide 1 »..... « Aide 8 »). Cette information d'identification est traitée en tant que préambule de la donnée correspondante. Les informations d'identification sont avantageusement plus courtes que les données qu'elles identifient. Par exemple, pour des données ayant une longueur comprise entre 500 et 1000 bits environ, les informations d'identification ont une longueur comprise entre 9 (avant codage) et 52 bits environ (après codage BCH), mais leur codage est plus robuste que celui des données.

Le codage, avant émission, des informations d'identification « Aide 1 » ...... « Aide 8 » fournit successivement les informations d'identification codées « Aide 1c » ..... « Aide 8c » qui sont multiplexées avec les données codées correspondantes «Mot codé 1 » ..... «Mot codé 8 », le résultat du multiplexage étant émis, puis démultiplexé à la réception. Les informations d'identification codées reçues sont décodées séparément des données correspondantes par une fonction non représentée sur le dessin.

Dans l'exemple de la figure 3, on suppose que la première occurrence de la donnée « Mot codé 1 » est reçue par le récepteur de façon défectueuse (elle ne porte pas suffisamment d'énergie accumulée et/ou ne contient pas assez de symboles), donc son premier décodage (représenté tout en bas de la figure 3) fournit seulement l'information « Rien », la sortie de données décodées (qui aurait dû fournir « Mot 1 ») étant inhibée. Ensuite a lieu le décodage de la donnée codée suivante « Mot codé 2 », que l'on suppose être correct, son décodage produisant alors « Mot 2 ».

Comme, par hypothèse, les données sont émises de façon identique et répétitive, à l'occurrence suivante de la donnée « Mot codé 1 » dans le récepteur, on suppose que cette donnée codée contient suffisamment d'énergie accumulée et/ou de symboles, et qu'elle peut donc être décodée correctement, ce qui est représenté dans la partie de droite de la figure 3 : on obtient en effet « Mot 1 » en sortie de décodage, et la sortie « Rien » est inhibée. On notera ici que les numéros accolés à « Mot » ne représentent pas des numéros d'ordre séquentiel, mais seulement des identifiants.

L'avantage de la solution de l'invention est de permettre la réception des données de navigation en accumulant autant que nécessaire l'énergie transmise, grâce au fait que, d'une part, les informations d'identification codées, liées aux données correspondantes, sont codées de façon plus robuste que ces données et sont plus courtes qu'elles, et ont donc statistiquement beaucoup plus de chances d'être reçues correctement par le récepteur, et que, d'autre part, ces informations d'identification permettent de repérer les symboles des données codées et donc de les accumuler dans l'emplacement où elles sont stockées, et ce, même si les données codées sont émises de façon non prédictible *a priori*.

Le fait de devoir transmettre une aide au moyen d'un codage suffisamment long afin de garantir une bonne qualité de réception et de protection de cette aide ne constitue pas un inconvénient dans la mesure où, dans un système nécessitant déjà la transmission de données ayant la même contrainte de robustesse, il ne s'agit en fait que de rallonger cette transmission de données. Par exemple le service « Safety of Life » de Galileo nécessite la transmission de compteurs ayant déjà cette contrainte. Ainsi, les données Galileo sont accessibles dans des environnements où celles de GPS L1C ne le sont plus.

Le procédé de l'invention peut être mis en oeuvre dans différents systèmes de transmission autres que ceux des satellites de radionavigation, par exemple les systèmes multi-transmissions (transmission de données sur des canaux différents dans le temps, l'espace et la fréquence), ou bien des systèmes de radiodiffusion RF (dits « broadcast »), coopératifs ou non, ou bien même simplement lorsque l'on désire gagner de la bande passante (en codant alors moins robustement les données). De façon générale, l'invention peut être mise en oeuvre dans tout système où le récepteur est connecté simultanément à plusieurs émetteurs, par exemple dans le domaine de la radiodiffusion numérique, la TNT (télévision numérique terrestre), la télévision transmise par téléphone portable de type G3S,...

## Revendications

1. Procédé d'acquisition d'un ensemble de données de navigation diffusées de façon répétitive et non prédictible *a priori* (« Mot 1 »..... « Mot 8 ») en environnement difficile par des satellites de radionavigation, lesdites données étant répétées au cours du temps par plusieurs satellites et/ou sur plusieurs fréquences, selon lequel, à l'émission, on ajoute en préambule à chaque donnée ou ensemble de données une information d'identification de ces données (« Aide 1 »..... «Aide 8 ») plus courte que l'ensemble de ces données et mieux codée qu'elles en vue d'une acquisition plus robuste de cet ensemble de données, et selon lequel, à la réception, on identifie chaque donnée ou ensemble de données incident à l'aide de l'information d'identification, on accumule l'énergie des données ou ensembles de données ayant la même information d'identification, et que lorsqu'une quantité d'énergie suffisante a été accumulée, l'ensemble de données ou la donnée correspondant (e) est reconnu (e) valide.

2. Procédé selon la revendication 1, dans laquelle pour des données ayant une longueur comprise entre 500 et 1000 bits environ, les informations d'identification ont une longueur comprise entre 9 bits avant codage et 52 bits environ après codage BCH.

## Patentansprüche

1. Verfahren zum Erfassen eines Satzes von Navigationsdaten, die wiederholt und unvorhersehbar a priori ("Wort 1"... "Wort 8") durch Funknavigationssatelliten in einer schwierigen Umgebung verbreitet werden, wobei die Daten im Laufe der Zeit von mehreren Satelliten und/oder auf mehreren Frequenzen wiederholt werden, wobei beim Senden jedem Datenelement oder Datensatz als Präambel Identifikationsinformationen der Daten ("Hilfe 1"... "Hilfe 8") hinzugefügt werden, die kürzer und besser codiert sind als der Satz dieser Daten, im Hinblick auf eine robustere Erfassung des Datensatzes, und wobei beim Empfang jedes Datenelement oder jeder einfallende Datensatz anhand der Identifikationsinformationen identifiziert wird, wobei die Energie der Daten oder des Datensatzes mit denselben Identifikationsinformationen akkumuliert wird, und wobei, wenn eine ausreichende Menge Energie akkumuliert ist, der Datensatz oder das entsprechende Datenelement (e) als gültig erkannt (e) wird.

2. Verfahren nach Anspruch 1, wobei für Daten mit einer Länge zwischen etwa 500 und 1000 Bit die Länge der Identifikationsinformationen zwischen etwa 9 Bit vor dem Codieren und etwa 52 Bit nach dem BCH-Codieren liegt.

## Claims

1. A method for acquiring a set of navigation data repetitively and unpredictably broadcast, a priori ("Word 1"... "Word 8"), by radio navigation satellites in a harsh environment, said data being repeated over time by a plurality of satellites and/or on a plurality of frequencies, wherein, on transmission, as a preamble to each data item or data set, identification information of said data ("Aid 1"... "Aid 8") is added, which identification information is shorter than said data set and is better encoded than said data, with a view to a more robust acquisition of said data set, and wherein, on reception, each data item or incident data set is identified using said identification information, the energy from the data or data set with the same identification information is accumulated, and, when a sufficient amount of energy has been accumulated, the data set or the corresponding data item (e) is recognised (e) as valid.

2. The method according to claim 1, wherein for data with a length of between approximately 500 and 1000 bits, the length of said identification information is between approximately 9 bits before encoding and approximately 52 bits after BCH encoding.
